(19) Europäisches Patentamt / European Patent Office / Office européen des brevets

(11) EP 1 992 658 A1

(12) EUROPEAN PATENT APPLICATION
published in accordance with Art. 158(3) EPC

(43) Date of publication:
**19.11.2008 Bulletin 2008/47**

(21) Application number: **07708398.8**

(22) Date of filing: **15.02.2007**

(51) Int Cl.:
***C08K 5/13*** *(2006.01)* ***C08F 10/02*** *(2006.01)*
***C08F 297/08*** *(2006.01)* ***C08L 23/00*** *(2006.01)*

(86) International application number:
**PCT/JP2007/052668**

(87) International publication number:
**WO 2007/094383 (23.08.2007 Gazette 2007/34)**

(84) Designated Contracting States:
**BE DE**

(30) Priority: **15.02.2006 JP 2006038340**

(71) Applicants:
- **Mitsui Chemicals, Inc.**
  **Tokyo 105-7117 (JP)**
- **Prime Polymer Co., Ltd.**
  **Tokyo 105-7117 (JP)**

(72) Inventors:
- **FUKUSHI, Keiko**
  **Ichihara-shi, Chiba, 299-0108 (JP)**
- **IWAMASA, Kenji**
  **Ichihara-shi, Chiba, 299-0108 (JP)**
- **OKAMOTO, Masahiko**
  **Sodegaura-shi, Chiba, 299-0265 (JP)**

(74) Representative: **Cresswell, Thomas Anthony**
**J.A. KEMP & CO.**
**14 South Square**
**Gray's Inn**
**London**
**WC1R 5JJ (GB)**

# (54) ENVIRONMENTAL STRESS RUPTURE RESISTANCE MODIFIER AND ENVIRONMENTAL STRESS RUPTURE RESISTANCE-MODIFIED RESIN COMPOSITION CONTAINING SAME

(57) Disclosed is an environmental stress cracking resistance improver that is composed of a compound that has in the molecule thereof a structure represented by the following general formula (I) and a molecular weight of from 200 to 2,000. Also disclosed are a method for improving environmental stress cracking resistance properties that uses the environmental stress cracking resistance improver, and a resin composition with improved environmental stress cracking resistance properties that contains the environmental stress cracking resistance improver.

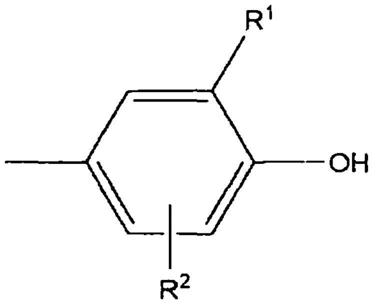

· · · · (I)

In the above general formula, $R^1$ and $R^2$ are each a hydrocarbon group having 1 to 6 carbon atoms, and may be the same or different from each other.

EP 1 992 658 A1

## Description

[Technical Field]

The present invention relates to an environmental stress cracking resistance improver composed of a compound having a specific benzyl group with a substituted aromatic ring, to a method for improving environmental stress cracking resistance properties by using the improver, and to a resin composition that contains the improver and exhibits improved environmental stress cracking resistance properties.

[Background Art]

Environmental stress cracking is a typical brittle fracture caused under a tensile stress lower than the tensile strength of a resin (material). In particular, environmental stress cracking is a phenomenon where a molded article develops brittle cracks with time due to a synergistic action of chemicals and stress when chemicals such as chemical substances attach to or contact a portion loaded with a tensile stress (a stressed portion). It is generally accepted that cracking occurs because: molecules are cleaved in the presence of a stress (in a stress loaded state); chemicals interpenetrate into the cleavages, so that intermolecular cohesion (strong bonding between molecules) is lowered; and molecules slip, so that cracking is developed. However, the cracking mechanism has not been fully understood at present. In fact, various countermeasures to prevent the environmental stress cracking have been attempted so far focusing on polyolefins that are mother materials of molded articles. However, until now, there have been quite few approaches focusing on additives which can improve environmental stress cracking resistance properties effectively regardless of the types of mother materials. (Known examples of the approaches focusing on the mother materials include Japanese Patent Application Laid-Open Publication No. H09-3266, Japanese Patent Application Laid-Open Publication No. H09-176400, and others.)

[Patent Document 1] Japanese Patent Application Laid-Open Publication No. H09-3266
[Patent Document 2] Japanese Patent Application Laid-Open Publication No. H09-176400.

[Disclosure of the Invention]

[Problems to Be Solved by the Invention]

Objects of the present invention are to provide an environmental stress cracking resistance improver capable of improving the environmental stress cracking resistance properties of olefin resins including polyethylene polymers, to provide a method for improving the environmental stress cracking resistance properties by using the foregoing improver, and to provide a resin composition that contains the foregoing improver and exhibits improved environmental stress cracking resistance properties.

[Means for Solving the Problems]

An environmental stress cracking resistance improver according to the present invention comprises a compound that has in the molecule thereof a structure represented by the following general formula (I) and a molecular weight of from 200 to 2,000.

[Chemical 1]

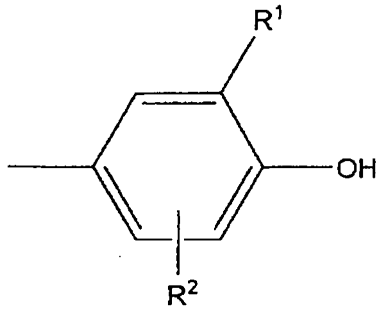

. . . (I)

(In the above general formula (I), $R^1$ and $R^2$ are each a hydrocarbon group having 1 to 6 carbon atoms, and may be the same or different from each other.)

The environmental stress cracking resistance improver according to the present invention preferably comprises a compound that has in the molecule thereof 1 to 4 benzyl groups with a substituted aromatic ring represented by the following general formula (II) and has a molecular weight of from 300 to 2,000.

[Chemical 2]

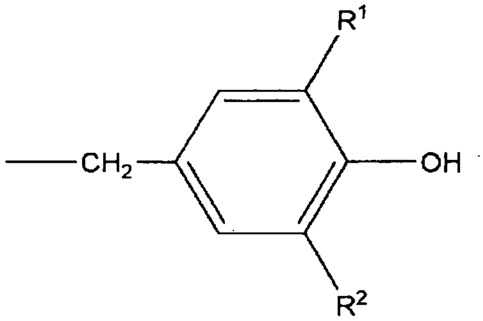

. . . (II)

(In the above general formula (II), $R^1$ and $R^2$ are each a hydrocarbon group having 1 to 6 carbon atoms, and may be the same or different from each other.)

In a preferred embodiment, $R^1$ and $R^2$ in the general formula (I) are selected from methyl group and tert-butyl group.

Further, the present invention relates to a method for improving the environmental stress cracking resistance properties of olefin resins comprising adding the foregoing environmental stress cracking resistance improver to the resins.

Still further, the present invention relates to a resin composition that comprises the environmental stress cracking resistance improver and an olefin resin, and exhibits improved environmental stress cracking resistance properties. The environmental stress cracking resistance improver is preferably contained in an amount of from 0.005 to 5 parts by weight with respect to 100 parts by weight of the olefin resin. In a still preferred embodiment, the olefin resin is an ethylene resin. In a particularly preferred embodiment, the ethylene resin satisfies the following requirements (1) to (3) simultaneously.

(1) The ethylene resin contains structural units derived from an $\alpha$-olefin having 3 to 10 carbon atoms in an amount of 1.00 mol% or less.

(2) The density of the ethylene resin is in the range of from 945 to 975 kg/$m^3$.

(3) The MFR of the ethylene resin at a temperature of 190°C and under a load of 21.6 kg as evaluated in accordance with ASTM D1238-89 is in the range of from 1 to 1,000 g/10 min.

Furthermore, the present invention relates to a molded article that is formed from the foregoing resin composition composed of the environmental stress cracking resistance improver and the olefin resin and having improved environmental stress cracking resistance properties. The molded articles preferably include fuel tanks, cans for industrial chemicals, and bottle containers.

[Effect of the Invention]

The environmental stress cracking resistance improver of the present invention can remarkably improve the environmental stress cracking resistance properties of olefin resins such as ethylene polymers.

[Best Mode for Carrying Out the Invention]

Hereinafter will be described in detail the environmental stress cracking resistance improvers according to the present invention and the resin compositions that contain the improver and exhibit improved environmental stress cracking resistance properties.

Environmental Stress Cracking Resistance Improver

An environmental stress cracking resistance improver according to the present invention is composed of a compound that has in the molecule thereof a structure represented by the following general formula (I) and has a molecular weight of from 200 to 2,000 and preferably from 300 to 2,000.
[Chemical 3]

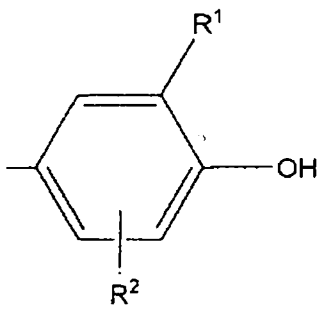

· · · (I)

(In the above general formula (I), $R^1$ and $R^2$ are each a hydrocarbon group having 1 to 6 carbon atoms, and may be the same or different from each other.)
The environmental stress cracking resistance improver according to the present invention is preferably composed of a compound that has in the molecule thereof 1 to 4 benzyl groups with a substituted aromatic ring represented by the following general formula (II) and has a molecular weight of from 300 to 2,000.
[Chemical 4]

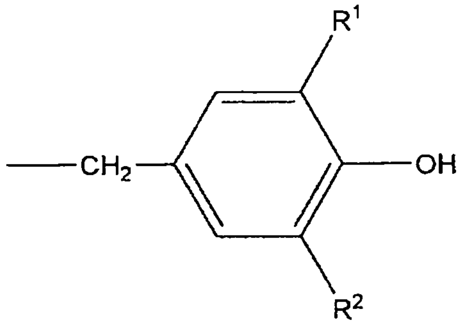

... (II)

In the above general formula (II), $R^1$ and $R^2$ are selected from hydrocarbon groups having 1 to 6 carbon atoms and may be the same or different from each other. Examples of the hydrocarbon groups having 1 to 6 carbon atoms include methyl, ethyl, n-propyl, isopropyl, n-butyl, isobutyl, sec-butyl, tert-butyl, pentyl, hexyl and the like. In a preferred embodiment, $R^1$ and $R^2$ are selected from methyl and tert-butyl. In a still preferred embodiment, both $R^1$ and $R^2$ are tert-butyl.

Examples of the compounds having the structure represented by the above general formula (I) include butylated hydroxytoluene, n-octadecyl-β-(4'-hydroxy-3',5'-di-tert-butylphenyl)propiona te, tocopherol, tetrakis[methylene-3-(3',5) di-t-butyl-4'-hydroxyphenyl]propi onate]methane ("Irganox 1010" (trade name)), 3,5-di-tert-butyl-4-hydroxytoluene, n-octadecyl-3-(4'-hydroxy-3',5'-di-tert-butylphenyl)propiona te, 3,9-bis[2-{3-(3-tert-butyl-4-hydroxy-5-methylphenyl)propiony loxy}-1,1-dimethylethyl]2,4,8,10-tetraoxaspiro[5,5]undecane, 1,3,5-trimethyl-2,4,6-tris(3,5-di-tert-butyl-4-hydroxyphenyl )benzylbenzene, 2,2'-ethylidene-bis(2,4-tert-butylphenol), 4,4'-thiobis(3-methyl-6-tert-butylphenol), 1,3,5-trimethyl-2,4,6-tris(3,5-di-tert-butyl-4-hydroxybenzyl )benzene, tris(3,5-di-tert-butyl-4-hydroxybenzyl)isocyanurate, tris(4-tert-butyl-2,6-di-methyl-3-hydroxybenzyl)isocyanurate, 3,9-bis[1,1-di-methyl-2-{β-(3-tert-butyl-4-hydroxy-5-methylp henyl)propionyloxy}ethyl]-2,4,8,10-tetraoxaspiro[5,5]undecan e, 6-[3-(3-t-butyl-4-hydroxy-5-methylphenyl)propoxy]-2,4,6,8,10 -tetra-t-butyldibenz[d,f][1.3.2]dioxaphosphepyne ("Sumilizer GP" (trade name)), and the like.

Among these compounds, tetrakis[methylene-3-(3',5) di-t-butyl-4'-hydroxyphenyl]propionate]methane ("Irganox 1010" (trade name)), n-octadecyl-β-(4'-hydroxy-3',5'-di-tert-butylphenyl)propiona te ("Irganox 1076" (trade name)), and tris(3,5-di-tert-butyl-4-hydroxybenzyl)isocyanurate ("Irganox 3114" (trade name)) are preferred. These compounds may be used singly or in a combination of two or more kinds.

The environmental stress cracking resistance improver of the present invention is admixed with an olefin resin and can improve the environmental stress stacking resistance properties of the resin. In the present invention, examples of the olefin resins include an ethylene resin, a propylene resin, an ethylene/α-olefin copolymer, a propylene/α-olefin copolymer, polybutene, a 4-methyl-1-pentene polymer, a copolymer of ethylene or propylene and a cyclo olefin, a copolymer of ethylene or propylene and an olefin having a polar group, and the like. Among these, the ethylene resin is remarkably improved in environmental stress cracking resistance properties by the addition of the environmental stress cracking resistance improver. In the present invention, the ethylene resins include ethylene polymers such as an ethylene homopolymer obtained from ethylene solely, and an ethylene/α-olefin copolymer obtained from ethylene and an α-olefin having 3 to 20 carbon atoms; mixtures of two or more kinds of these ethylene polymers; and blends that contain the ethylene polymers including the ethylene homopolymer and the ethylene copolymers as a main component and other resins. From the viewpoints of providing the highest improvement on the environmental stress cracking resistance properties and achieving performances required for bottle containers for chemicals, the improver is preferably added to a single ethylene polymer that satisfies the following requirements (1) to (3) simultaneously, a mixture of two or more kinds of ethylene polymers that each satisfy the following requirements (1) to (3) simultaneously, or an ethylene resin that contains 50 wt% or more and preferably 70 wt% or more of ethylene polymers that each satisfy the following requirements (1) to (3) simultaneously.

Requirement (1)

The structural units derived from an α-olefin having 3 to 10 carbon atoms are generally contained in an amount of from 0.00 to 1.00 mol% and preferably from 0.02 to 1.00 mol%. In the case where the ethylene resin does not contain any ethylene homopolymer, that is, where the ethylene resin consists of a copolymer of ethylene and an α-olefin having 4 to 10 carbon atoms, the structural units derived from ethylene are generally contained in an amount of from 99.50 to 99.00 mol% and preferably from 99.80 to 99.10 mol%, and the repeating units derived from the α-olefin are generally contained in an amount of from 0 to 1.00 mol%, preferably from 0.02 to 1.00 mol%, and more preferably from 0.02 to 0.90 mol%. Furthermore, in the case where the ethylene resin contains the ethylene homopolymer and the ethylene/α-olefin copolymer, the ethylene/α-olefin copolymer moiety generally contains the structural units derived from ethylene

in an amount of from 97.50 to 99.96 mol% and preferably from 99 to 99.96 mol%, and the repeating units derived from the α-olefin in an amount of from 0.04 to 2.50 mol% and preferably from 0.04 to 1.00 mol%. Examples of the α-olefins include propylene, 1-butene, 1-pentene, 1-hexene, 4-methyl-1-pentene, 3-methyl-pentene, 1-heptene, 1-octene, and 1-decene. Particularly preferably used are butene-1, hexene-1, 4-methylpentene-1, and octene-1.

Requirement (2)

The density is generally from 945 to 975 kg/$m^3$, preferably from 947 to 972 kg/$m^3$, and more preferably from 950 to 969 kg/$m^3$.

Requirement (3)

The MFR as measured at a temperature of 190°C under a load of 21.6 kg in accordance with ASTM D1238-89 is generally from 1 to 1,000 g/10 min and preferably from 1 to 200 g/10 min. More preferably, the MFR is determined depending on the applications of the resin composition of the present invention that has improved environmental stress cracking resistance properties. For example, in the applications for small-size blow-molded containers, MFR is preferably from 20 to 200 g/10 min. In the further extensive applications for medium and large size blow-molded containers, MFR is preferably from 1 to 20 g/10 min.

In the present invention, as the ethylene resin is preferably used a polymer (hereinafter, referred to as the "ethylene polymer (E)") that satisfies the aforementioned requirements (1) to (3) simultaneously and is obtained by polymerizing ethylene solely or copolymerizing ethylene and an α-olefin having 3 to 10 carbon atoms in the presence of an olefin polymerization catalyst that is composed of

(A) a transition metal compound in which a cyclopentadienyl group and a fluorenyl group are bonded by covalent bond crosslinking containing a Group 14 atom;
(B) at least one compound selected from

(B-1) an organometallic compound,
(B-2) an organoaluminum oxy compound, and
(B-3) a compound that reacts with the transition metal compound to form an ion pair; and

(C) a carrier.

(A) Transition Metal Compound

The transition metal compound (A) is a compound that is represented by the following general formulae (1) and (2).

[Chemical 5]

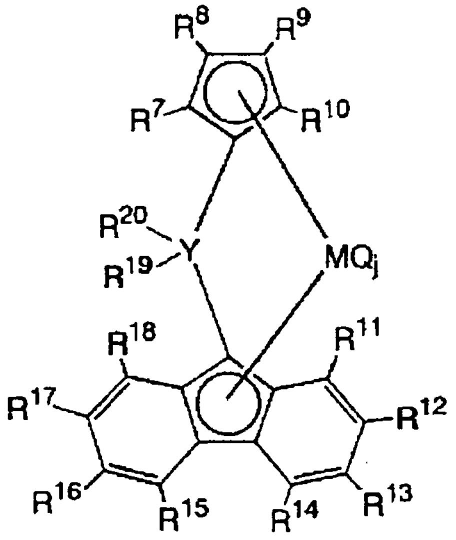

··· (1)

[Chemical 6]

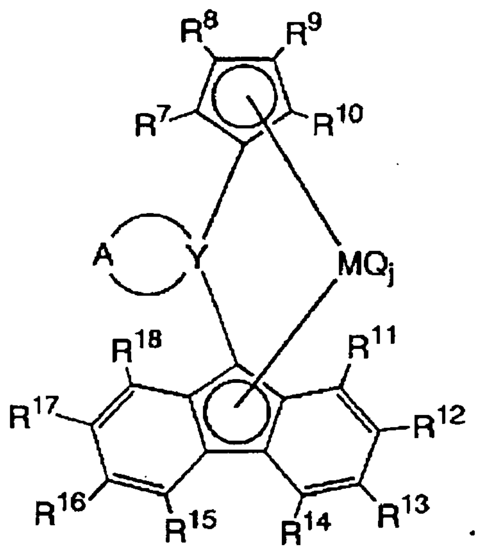

··· (2)

(In the above general formulae (1) and (2), $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$, and $R^{20}$ are selected from a hydrogen atom, a hydrocarbon group, and a silicon-containing hydrocarbon group, and may be the same or different from each other; adjacent substituent groups of $R^7$ to $R^{18}$ may bond together and form a ring; A is a divalent hydrocarbon group that has 2 to 20 carbon atoms and may partly contain an unsaturated bond and/or an aromatic ring; A forms a ring structure together with Y; A may contain two or more ring structures including the ring structure that it forms together with Y; Y is carbon or silicon; M is a metal selected from Group 4 in the periodic table; Q may be the same or different from each other and is selected from a halogen, a hydrocarbon group, an anionic ligand, and a neutral ligand capable of coordinating with a lone electron pair; and j is an integer of 1 to 4.

In the present invention, is preferably used a compound in which $R^7$ to $R^{10}$ are each a hydrogen atom, Y is a carbon atom, M is Zr and j is 2.

The transition metal compound (A) that is used in the following examples is specifically a compound represented by the following formula (3), but the transition metal compound is not limited to this compound in the present invention.

[Chemical 7]

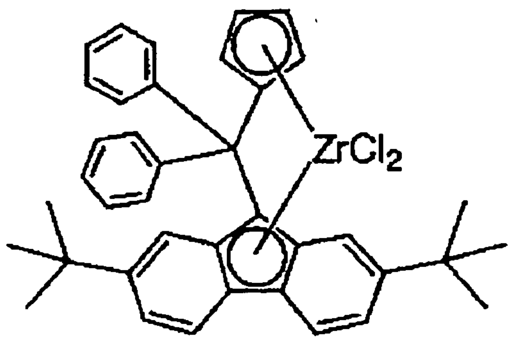 ··· (3)

The structure of the transition metal compound is determined with 270 MHz 1H-NMR (GSH-270, manufactured by JEOL Ltd.) and FD-Mass Spectrometry (SX-102A, manufactured by JEOL Ltd.).

The transition metal compound (A) represented by the above formula (1) or (2) can be prepared in accordance with the process described, for example, in WO 01/27124.

(B-1) Organometallic Compound

The organometallic compounds (B-1) that are optionally used include specifically an organoaluminum compound represented by the following general formula.

General formula: $R^a{}_mAl(OR^b)_nH_pX_q$

(In the formula, $R^a$ and $R^b$ may be the same or different from each other and are preferably a hydrocarbon group having 1 to 15 and 1 to 4 carbon atoms; X is a halogen atom; m is a number satisfying the relation of $0<m\leq 3$; n is a number satisfying the relation of $0\leq n<3$; p is a number satisfying the relation of $0\leq p<3$; q is a number satisfying the relation of $0\leq q<3$; and $m+n+p+q=3$.) The aluminum compounds used in Examples are triisobutylaluminum and triethylaluminum.

(B-2) Organoaluminumoxy Compound

The organoaluminum oxy compound (B-2) that is optionally used may be an aluminoxane known so far or may be an organoaluminum oxy compound that is insoluble in benzene as cited in Japanese Patent Application Laid-Open Publication No. H02-78687.

The organoaluminum oxy compound that is used in the examples described later is a commercially available MAO/toluene solution that is manufactured by Nippon Aluminum Alkyls, Ltd.

(B-3) Compound that Reacts with Transition Metal Compound to Form Ion Pair

The compound (B-3) that reacts with the transition metal compound to form an ion pair as required is referred to as the "ionized ionic compound" hereinafter. The compounds include Lewis acids, ionic compounds, borane compounds, carborane compounds, and the like, that are described in Japanese Patent Application Laid-Open Publication No. H01-501950, Japanese Patent Application Laid-Open Publication No. H01-502036, Japanese Patent Application Laid-Open Publication No. H03-179005, Japanese Patent Application Laid-Open Publication No. H03-179006, Japanese Patent Application Laid-Open Publication No. H03-207703, Japanese Patent Application Laid-Open Publication No. H03-207704, U.S. Patent Publication No. 5, 321, 106, and others. Further, the compounds also include heteropoly compounds and isopoly compounds. These ionized ionic compounds (B-3) may be used in one kind alone or in a combination of two or more kinds.

In the examples described later, as the component (B), two components, (B-1) and (B-2) were used.

(C) Carrier

The carrier (C) that is optionally used is an inorganic or organic compound and is a granular or fine particulate solid.

Among these, as the inorganic compound, a porous oxide, an inorganic halide, clay, a clay mineral, or an ion-exchanging layered compound is preferred.

Such porous oxides vary in their properties depending on the types and production methods, however, the carrier that is preferably used in the present invention desirably has a particle size of from 1 to 300 μm and preferably from 3 to 200 μm, a specific surface area of from 50 to 1,000 $m^2$/g and preferably from 100 to 800 $m^2$/g, and a fine pore volume of from 0.3 to 3.0 $cm^3$/g. The carrier is used optionally after it is sintered at from 80 to 1,000°C and preferably from 100 to 800°C.

The carrier used in the following examples is $SiO_2$ manufactured by ASAHI GLASS CO., LTD, having an average particle size of 12 μm, a specific surface area of 800 $m^2$/g, and a fine pore volume of 1.0 $cm^3$/g.

Polymerization

On the polymerization, the use and addition order of the components are arbitrarily selected and the following embodiments (P-1) to (P-7) are mentioned as examples.

(P-1) A catalyst component in which the transition metal compound (A) (hereinafter, simply referred to as the "component (A) ") is supported on the carrier (C), and at least one component (B) (hereinafter, simply referred to as the "component (B)") selected from the organometallic compound (B-1), the organoaluminum oxy compound (B-2), and the ionized ionic compound (B-3) are added into a polymerization reactor in an arbitrary order.

(P-2) A catalyst in which the component (A) and the component (B) are supported on the carrier (C) is added to a polymerization reactor.

(P-3) A catalyst component in which the component (A) and the component (B) are supported on the carrier (C), and the component (B) are added into a polymerization reactor in an arbitrary order. In this case, the components (B) may be the same or different from each other.

(P-4) A catalyst component in which the component (B) is supported on the carrier (C), and the component (A) are added into a polymerization reactor in an arbitrary order.

(P-5) A catalyst component in which the component (B) is supported on the carrier (C), the component (A) and the component (B) are added into a polymerization reactor in an arbitrary order. In this case, the components (B) may be the same or different from each other.

(P-6) A catalyst in which the component (A) and the component (B) are supported on the carrier (C) is brought into contact with the component (B) in advance, and the resultant catalyst component is added into a polymerization reactor. In this case, the components (B) may be the same or different from each other.

(P-7) A catalyst in which the component (A) and the component (B) are supported on the carrier (C) is brought into contact with the component (B) in advance. The resultant catalyst component and the component (B) are added into a polymerization reactor in an arbitrary order. In this case, the components (B) may be the same or different from each other.

In the embodiments (P-1) to (P-7) described above, at least two components may be brought into contact with each other in advance.

An olefin may be prepolymerized on a solid catalyst component in which the component (A) and the component (B) are supported on the carrier (C). The prepolymerized solid catalyst component generally contains the prepolymerized polyolefin at a ratio of from 0.1 to 1,000 g, preferably from 0.3 to 500 g, and particularly preferably from 1 to 200 g per 1 g of the solid catalyst component.

For the purpose of allowing the polymerization to proceed smoothly, an antistatic agent, an antifouling agent, and the like may be used in combination or supported on the carrier.

The polymerization can be carried out in any process of liquid phase polymerization such as solution and suspension polymerization, or gas phase polymerization. Particularly preferable is suspension polymerization.

Inert hydrocarbon mediums used in the liquid phase polymerization include specifically aliphatic hydrocarbons such as propane, butane, pentane, hexane, heptane, octane, decane, dodecane, and kerosene; alicyclic hydrocarbons such as cyclopentane, cyclohexane, and methylcyclopentane; aromatic hydrocarbons such as benzene, toluene, and xylene; halogenated hydrocarbons such as ethylene chloride, chlorobenzene, and dichloromethane; and mixtures thereof. The olefin itself can be used as a solvent.

When the (co)polymerization is carried out by using the olefin polymerization catalyst as described above, the component (A) is generally used in an amount of from $10^{-12}$ to $10^{-2}$ mol and preferably from $10^{-10}$ to $10^{-3}$ mol per 1 liter of the reaction volume.

The optionally used compound (B-1) is used in such an amount that the molar ratio of the component (B-1) to

the transition metal atom (M) contained in the component (A), [(B-1)/M], is generally from 0.01 to 100,000 and preferably from 0.05 to 50,000.

The optionally used compound (B-2) is used in such an amount that the molar ratio of the aluminum atom contained in the component (B-2) to the transition metal atom (M) contained in the component (A), [(B-2)/M], is generally from 10 to 500,000 and preferably from 20 to 100,000.

The optionally used compound (B-3) is used in such an amount that the molar ratio of the component (B-3) to the transition metal atom (M) contained in the component (A), [(B-3)/M], is generally from 1 to 10 and preferably from 1 to 5.

Furthermore, the temperature of the polymerization in the use of the olefin polymerization catalyst is generally in the range of from -50 to +250°C, preferably from 0 to 200°C, and particularly preferably from 60 to 170°C. The condition of the polymerization pressure is generally from normal pressure to 100 kg/cm$^2$ and preferably from normal pressure to 50 kg/cm$^2$. The polymerization reaction may be carried out in any process of batch-type (batch-wise), semi-continuous, and continuous. Among these, the batch-type process is preferable. The polymerization is carried out in a gas phase or in a slurry phase in which polymer particles are precipitated out in the solvent. The polymerization of an ethylene polymer (E) is preferably carried out in two or more steps having different reaction conditions with each other. In the case of slurry polymerization or gas phase polymerization, the polymerization temperature is preferably from 60 to 90°C and more preferably from 65 to 85°C. Polymerization within this temperature range provides the ethylene polymer (E) having a narrow composition distribution. The obtainable polymer is particles with tens to thousands of micrometers in diameter. When the polymerization is performed in a continuous process using two polymerization reactors, operations such as dissolving the polymer in a good solvent and then precipitating the polymer in a poor solvent, sufficiently melt-kneading the polymer with a specific kneader and the like are required.

When the ethylene polymer (E) is desirably produced, for example, in two steps, in the former step an ethylene polymer having an intrinsic viscosity of from 0.3 to 1.8 dl/g is produced in an amount of from 40 to 80 wt% based on the ethylene polymer (E), and in the latter step a (co)polymer having an intrinsic viscosity of from 2.0 to 8.0 dl/g is produced in an amount of from 20 to 60 wt% based on the ethylene polymer (E). This order may be inverted. For example, the ethylene polymer (E) can be obtained by producing in the former step an ethylene homopolymer and in the latter step an ethylene/$\alpha$-olefin copolymer.

The intrinsic viscosity ([η]) is evaluated at 135°C using decalin as a solvent. In detail, about 20 mg of the ethylene polymer is dissolved in 15 ml of decalin and the specific viscosity of $\eta_{sp}$ is measured at 135°C in a oil bath. To the decalin solution, 5 ml of decalin as a solvent are added to dilute the solution, and then the specific viscosity of $\eta_{sp}$ is measured similarly. This diluting procedure is further repeated twice. The intrinsic viscosity is determined as $\eta_{sp}/C$ which the concentration (C) is extrapolated to 0.

$$[\eta] = \lim (\eta_{sp}/C) \quad (C \rightarrow 0)$$

The molecular weight of the ethylene polymer (E) can be adjusted by allowing hydrogen to exist in the polymerization system or changing the polymerization temperature. Further, the molecular weight can be adjusted by appropriately selecting the component (B) used.

The ethylene polymer (E) produced through the process as described above is excellent in environmental stress cracking resistance properties, and can produce a resin composition having still higher environmental stress cracking resistance properties by the addition of the environmental stress cracking resistance improver of the present invention.

Resin Composition with Improved Environmental Stress Cracking Resistance Properties

A resin composition with improved environmental stress cracking resistance properties according to the present invention generally contains the environmental stress cracking resistance improver in an amount of from 0.005 to 5 parts by weight, preferably from 0.01 to 1 part by weight, and more preferably from 0.05 to 0. 5 part by weight with respect to 100 parts by weight of the olefin resin.

The olefin resin, besides the environmental stress cracking resistance improver, may be blended with optional components such as an antistatic agent to prevent the resin from electrostatic adhesion and a metal carboxylate to prevent a molded article from developing lines and weld marks.

Examples of the antistatic agents optionally added include compounds of monoethanolamines, diethanolamines, aminoethylethanolamines, monoethanolamides, diethanolamides, or glycerin monoesters, but long chain alkyldiethanolamine compounds are preferably used. The additive amount thereof is from 0.01 to 1 part by weight with respect to 100 parts by weight of the olefin resin.

Examples of the metal carboxylates include carboxylates that are formed from carboxylic acids (organic acids) and metals; examples of the carboxylic acids include 2-ethylhexanoic acid, pelargonic acid, capric acid, neodecanoic acid, undecanoic acid, lauric acid, myristic acid, pentadecanoic acid, palmitic acid, oleic acid, linoleic acid, stearic acid, 12-hydroxystearic acid, naphthenic acid, and the like; examples of the metals include lithium, sodium, potassium, magnesium, calcium, strontium, barium, zinc, aluminum, and the like. Among these, calcium stearate is particularly preferably used. The additive amount of the carboxylic acid (organic acid) is generally from 0.001 to 1 part by weight and preferably from 0.01 to 0.2 part by weight with respect to 100 parts by weight of the olefin resin.

The usage of the environmental stress cracking resistance improver according to the present invention is not particularly limited. The improver can be added to the olefin resin by conventionally known methods. For example, the olefin resin and the environmental stress cracking resistance improver of the present invention are blended in a dry state with a Henschel mixer or the like and then melt-kneaded with a pressurized kneader or the like, or continuously melt-kneaded with a single-screw or twin-screw extruder to give the resin composition with improved environmental stress cracking resistance properties.

Molded Article

The resin composition of the present invention having improved environmental stress cracking resistance properties may be molded into blow molded articles, inflated articles, cast molded articles, extrusion lamination molded articles, extruded articles such as pipes and profiles, foamed articles, injection molded articles, vacuum-molded articles, and the like. Further, the resin composition may be formed into fibers, monofilaments, nonwoven fabrics, and the like. These molded articles include articles (multilayer stractures or the like) that contain a part consisting of the resin composition having improved environmental stress cracking resistance properties and a part consisting of other resins. The resin composition of the present invention having improved environmental stress cracking resistance properties exhibits excellent environmental stress cracking resistance particularly when the resin composition is used for blow molded articles among the above molded articles, and the resin composition is suitably used for the applications such as fuel tanks, cans for industrial chemicals, and bottle containers such as bleacher containers, detergent containers, softener containers and the like.

Hereinafter examples of the present invention will be described, but they should not be construed as limiting the invention in any way. Details of the measurement methods and the conditions for molding hollow articles that are used in the present description are as follows.

[EXAMPLES]

MFR: in accordance with ASTM D-1238-89, at 190°C, under a load of 2.16 kg or 21.6 kg.

Flexural modulus: in accordance with JIS K6922-2.

ESCR test method according to Bent Method: in accordance with ASTM D1693; a press sheet with a thickness of 2 mm; at 50°C; a 10% aqueous test solution of a nonionic surfactant ("Antarox Co 630" (trade name) available from Wako Pure Chemical Industries, Ltd.).

Density: According to JIS K6922-2, the strand used in the measurement of MFR was annealed in boiling water for 30 minutes and measured for density.

ESCR of Bottles: To the cylindrical bottle that was molded under the following conditions, 100 ml of "KITCHEN HITER" manufactured by Kao Corporation were added. After the bottle was sealed, it was maintained at 65°C so as to measure the time until cracks developed. Ten bottles (n = 10) were tested and the ESCR time was determined as the F50 value.

Conditions for Molding Hollow Articles:

With an extrusion blow molding machine (with a screw diameter of 50 mm, manufactured by Placo Co., Ltd.), the polyethylene was blow molded at a molding temperature of 180°C, a resin extrusion rate of 8 kg/h, and a mold temperature of 25°C to give a cylindrical bottle with an inside volume of 1 liter and a weight of 50 g.

[Production Example 1]

[Preparation of Solid Catalyst Component]

After 8.5 kg of silica that were dried at 200°C for 3 hours were suspended in 33 liters of toluene, 82.7 liters of methylaluminoxane solution (Al=1.42 mol/liter) were added dropwise to the suspension in 30 minutes. After the temperature of the resulting reaction mixture was elevated to 115°C in 1.5 hours, the reaction mixture was allowed to react at

that temperature for 4 hours. Then, the temperature of the reaction mixture was lowered to 60°C and the resulting supernatant liquid was removed by decantation. The resulting solid catalyst component was washed with toluene three times, and resuspended in toluene to give a solid catalyst component (α) (150 liters of total volume).

[Preparation of Supported Catalysts]

To a reactor, in which the air had been sufficiently replaced with nitrogen gas, the solid catalyst component (α) suspended in toluene was added in an amount of 19. 60 mol in terms of aluminum. While the suspension was stirred, to the suspension, was added 2 liters (74.76 mmol) of a 37.38 mmol/liter solution of diphenylmethylene(cyclopentadienyl) (2,7-di-t-butylfluorenyl) zirconium dichloride were added at room temperature (from 20 to 25°C), and then the suspension was further stirred for 60 minutes. After stirring was stopped, the supernatant liquid was removed by decantation and the residue was washed twice with 40 liters of n-hexane. The resulting supported catalyst was then reslurried in n-hexane to give a solid catalyst component (β) as 25 liters of a catalyst suspension.

[Prepolymerization of Solid Catalyst Component (β)]

To a reactor equipped with a stirrer, in a nitrogen gas atmosphere, 15.8 liters of purified n-hexane and the above solid catalyst component (β) were added, and then 5 mol of triisobutylaluminum were added. Thereafter, while stirring the resulting mixture, prepolymerization was carried out with ethylene so that 3 g of polyethylene was produced per one gram of the solid component for 4 hours. The polymerization temperature was maintained at 20 to 25°C.

After completion of the polymerization reaction, stirring was stopped, the supernatant liquid was removed by decantation, and the residue was washed with 35 liters of n-hexane four times. The resulting supported catalyst was suspended in 20 liters of n-hexane to give a solid catalyst component (γ) as a catalyst suspension.

[Polymerization]

To a first polymerization reactor, hexane at a rate of 45 liter/h, the above solid catalyst component (γ) at 0.12 mmol/h (in terms of Zr atom), triethylaluminum at 20 mmol/h, ethylene at 9.1 kg/h, hydrogen at 50 NL/g, and further a (polyethylene glycol) (polypropylene glycol) block copolymer ("Adeka Pluronic L-71" (trade name), manufactured by Asahi Denka Kogyo Co., Ltd.) that had a viscosity of 370 mPa·s as measured with a B-type viscometer at 25°C at 1.0g /h were continuously supplied. Furthermore, while continuously withdrawing the contents in the polymerization reactor so that the liquid level in the polymerization reactor was constant, polymerization was carried out at a polymerization temperature of 75°C, under a reaction pressure of 7.5 $kg/cm^2G$, and at a average residence time of 2.5 hours.

With a flash drum kept at a temperature of 65°C and under an internal pressure of 0.3 $kg/m^2G$, unreacted ethylene and hydrogen were substantially removed from the contents continuously withdrawn from the first polymerization reactor. After that, along with hexane at a rate of 43 liter/h, ethylene at 3.9 kg/h, hydrogen at 1.0 N-liter/h, and 1-hexene at 98 g/h, the contents were continuously supplied to a second polymerization reactor, and polymerization continuously carried out at a polymerization temperature of 72°C and a average residence time of 1.2 hours.

In the second polymerization reactor too, the contents in the polymerization reactor were continuously withdrawn so that the liquid level in the polymerization reactor was constant. In order to prevent unexpected polymerization such as generation of a polymer containing a large amount of 1-hexene, the polymerization catalyst in the liquid withdrawn form the second polymerization reactor was inactivated by feeding methanol at a rate of 2 liter/h. After that, with a solvent separation apparatus, hexane and unreacted monomers in the liquid were removed and then the resulting mixture was dried to give a polymer. The resulting ethylene polymer contained 1-hexene-derived skeletons in an amount of 0.15 mol%, and had a density of 960 $kg/m^3$, an MFR (under a load of 2.16 kg) of 0.50 g/10 min, and an MFR (under a load of 21.6 kg) of 45 g/10 min.

[Production Example 2]

[Polymerization]

To a first polymerization reactor, hexane at a rate of 45 liter/h, the above solid catalyst component (γ) at 0.16 mmol/h in terms of Zr atom, triethylaluminum at 20 mmol/h, ethylene at 8.1 kg/h, hydrogen at 40 NL/g, and further a (polyethylene glycol) (polypropylene glycol) block copolymer ("Adeka Pluronic L-71" (trade name), manufactured by Asahi Denka Kogyo Co., Ltd.) that had a viscosity of 370 mPa·s as measured with a B-type viscometer at 25°C at 1.0 g/h were continuously supplied. Furthermore, while continuously withdrawing the contents in the polymerization reactor so that the liquid level in the polymerization reactor was constant, polymerization was carried out at a polymerization temperature of 85°C, under a reaction pressure of 7.5 $kg/cm^2G$, and at a average residence time of 2.5 hours.

With a flash drum kept at a temperature of 65°C and under an internal pressure of 0.3 kg/m$^2$G, unreacted ethylene and hydrogen were substantially removed from the contentscontinuously withdrawn from the first polymerization reactor. After that, along with hexane at a rate of 43 liter/h, ethylene at 3.5 kg/h, hydrogen at 4.0 N-liter/h, and 1-hexene at 98 g/h, the contents were continuously supplied to a second polymerization reactor, and polymerization continuously carried out at a polymerization temperature of 72°C and a average residence time of 1.2 hours.

In the second polymerization reactor too, the contents in the polymerization reactor were continuously withdrawn so that the liquid level in the polymerization reactor was constant. In order to prevent unexpected polymerization such as generation of a polymer containing a large amount of 1-hexene, the polymerization catalyst the liquid withdrawn form the second polymerization reactor was inactivated by feeding methanol at a rate of 2 liter/h. After that, with a solvent separation apparatus, hexane and unreacted monomers in the liquid were removed and then the resulting mixture was dried to give a polymer. The resulting ethylene polymer contained 1-hexene-derived skeletons in an amount of 0.12 mol%, and had a density of 960 kg/m$^3$, an MFR (under a load of 2.16 kg) of 0.25g/10 min, and an MFR (under a load of 21.6 kg) of 65 g/10 min.

[Example 1]

100 Parts by weight of the polymer particles obtained in Production Example 1 were mixed with 0.15 part by weight of tri(2,4-di-t-butylphenyl) phosphate as a secondary antioxidant, 0.05 part by weight of calcium stearate as a hydrochloric acid absorber, 0.13 part by weight of lauryldiethanolamine for the purpose of preventing dust adhesion to a product bottle, and 0.05 part by weight of phenolic antioxidant "Irganox 1076" (trade name, manufactured by Ciba Specialty Chemicals Inc.) as an environmental stress cracking resistance improver.

After that, the mixture was granulated into a sample for measurement with a single-screw extruder (65 mm in diameter, L/D = 25) manufactured by Placo Co., Ltd., at a temperature of 220°C and a resin extrusion rate of 20 kg/h.

The physical properties of the ethylene resin and bottles obtained from the polyethylene resin are shown in Table 1. The bottles exhibited an excellent ESCR as compared with the case (Comparative Example 1) where the environmental stress cracking resistance improver of the present invention was not used.

[Example 2]

100 Parts by weight of the polymer particles obtained in Production Example 1 were mixed with 0.15 part by weight of tri (2, 4-di-t-butylphenyl) phosphate as a secondary antioxidant, 0.05 part by weight of calcium stearate as a hydrochloric acid absorber, 0.13 part by weight of lauryldiethanolamine for the purpose of preventing dust adhesion to a product bottle, and 0.10 part by weight of phenolic antioxidant ""Irganox 3114" (trade name, manufactured by Ciba Specialty Chemicals Inc.) as an environmental stress cracking resistance improver. The resulting mixture was granulated under the conditions described in Example 1. The physical properties of thus granulated polyethylene resin and hollow molded articles obtained from the resin are shown in Table 1. The articles exhibited an excellent ESCR as compared with Comparative Example 1.

[Example 3]

100 Parts by weight of the polymer particles obtained in Production Example 2 were mixed with 0.15 part by weight of tri (2,4-di-t-butylphenyl) phosphate as a secondary antioxidant, 0.05 part by weight of calcium stearate as a hydrochloric acid absorber, 0.13 part by weight of lauryldiethanolamine for the purpose of preventing dust adhesion to a product bottle, and 0.10 part by weight of phenolic antioxidant "Sumirizer GP" (trade name, manufactured by Sumitomo Chemical Co. , Ltd.) as an environmental stress cracking resistance improver. The resulting mixture was granulated under the conditions described in Example 1. The physical properties of thus granulated polyethylene resin and hollow molded articles obtained from the resin are shown in Table 2. The articles exhibited an excellent ESCR as compared with Comparative Example 2 where the environmental stress cracking resistance improver of the present invention was not used.

[Example 4]

100 Parts by weight of a commercially available Ziegler-catalyst high density polyethylene of "Hi-zex 6200BPU" (trade name, manufactured by Prime Polymer Co., Ltd.) were mixed with 0.05 part by weight of "PEP-36" (trade name, manufactured by Asahi Denka Kogyo Co. , Ltd.) as a secondary antioxidant, 0. 15 part by weight of calcium stearate as a hydrochloric acid absorber, 0.09 part by weight of lauryldiethanolamine for the purpose of preventing dust adhesion to a product bottle, and 0.10 part by weight of phenolic antioxidant "Irganox 3114" (trade name, manufactured by Ciba Specialty Chemicals Inc.) as an environmental stress cracking resistance improver. The resulting mixture was granulated

under the conditions described in Example 1. The physical properties of thus granulated ethylene resin and hollow molded articles obtained from the resin are shown in Table 3. The articles exhibited an excellent ESCR as compared with the case (Comparative Example 4) where the environmental stress cracking resistance improver of the present invention was not contained and the case (Comparative Example 3) where an additive which did not satisfy the requirements for the environmental stress cracking resistance improver of the present invention was used.

[Comparative Example 1]

100 Parts by weight of the polymer particles obtained in Production Example 1 were mixed with 0.15 part by weight of tri(2,4-di-t-butylphenyl) phosphate as a secondary antioxidant, 0.05 part by weight of calcium stearate as a hydrochloric acid absorber, and 0.13 part by weight of lauryldiethanolamine for the purpose of preventing dust adhesion to a product bottle. The resulting mixture was granulated under the conditions described in Example 1. The physical properties of thus granulated polyethylene resin and hollow molded articles obtained from the resin are shown in Table 1.

[Comparative Example 2]

100 Parts by weight of the ethylene polymer particles obtained in Production Example 2 were mixed with 0.15 part by weight of tri(2,4-di-t-butylphenyl) phosphate as a secondary antioxidant, 0.05 part by weight of calcium stearate as a hydrochloric acid absorber, and 0.13 part by weight of lauryldiethanolamine for the purpose of preventing dust adhesion to a product bottle. The resulting mixture was granulated under the conditions described in Example 1. The physical properties of thus granulated polyethylene resin and hollow molded articles obtained from the resin are shown in Table 2.

[Comparative Example 3]

Components were mixed, the mixture was granulated and hollow molded articles of the resin were produced similarly to Example 4" except that 0.05 part by weight of 2,6-di-t-butyl-p-cresol ("Yoshinox BHT" (trade name, manufactured by Yoshitomi Pharmaceutical Industries, Ltd.)) was used in place of 0.10 part by weight of the phenolic antioxidant "Irganox 3114" (trade name, manufactured by Ciba Specialty Chemicals Inc.). The results are shown in Table 2.

[Comparative Example 4]

100 Parts by weight of a commercially available Ziegler-catalyst high density polyethylene of "Hi-zex 6008B" (trade name, manufactured by Prime Polymer Co., Ltd.) and "6200BPU" (trade name, manufactured by Prime Polymer Co., Ltd.) were mixed with 0.05 part by weight of "PEP-36" (trade name, manufactured by Asahi Denka Kogyo Co., Ltd.) as a secondary antioxidant, 0.15 part by weight of calcium stearate as a hydrochloric acid absorber, and 0.09 part by weight of lauryldiethanolamine for the purpose of preventing dust adhesion to a product bottle. The resulting mixture was granulated under the conditions described in Example 1. The physical properties of thus granulated ethylene resin and hollow molded articles obtained from the resin are shown in Table 3.

Here, the abbreviations of additives used in the examples and tables are as follows. Some of the additives are accompanied with structural formulae.

Irg. 168: tri(2,4-di-t-butylphenyl) phosphate,
Ca-St: calcium stearate,
EA: lauryldiethanolamine,
Irg. 1076: Irganox 1076 (trade name),

[Chemical 8]

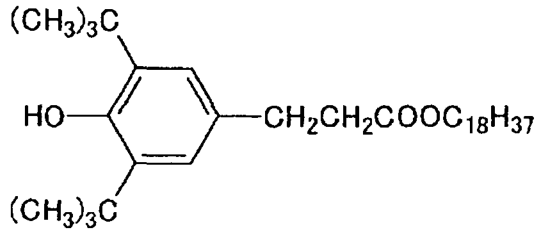

Irg. 3114: Irganox 3114 (trade name),

[chemical 9]

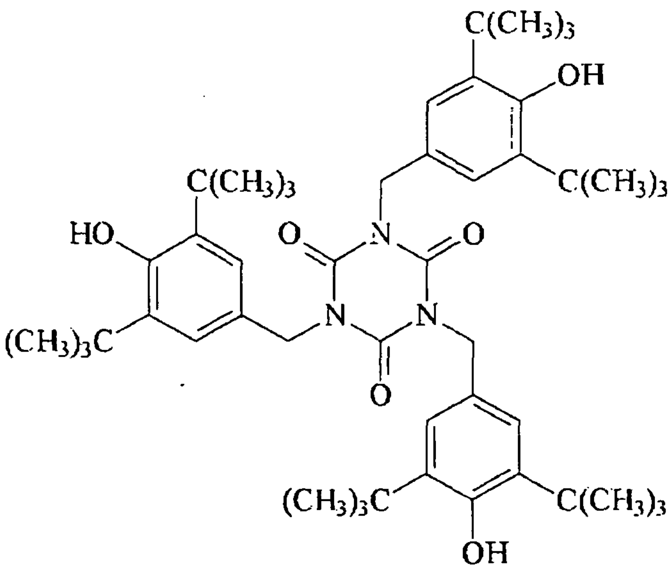

GP: Sumirizer GP (trade name),

and

[chemical 10]

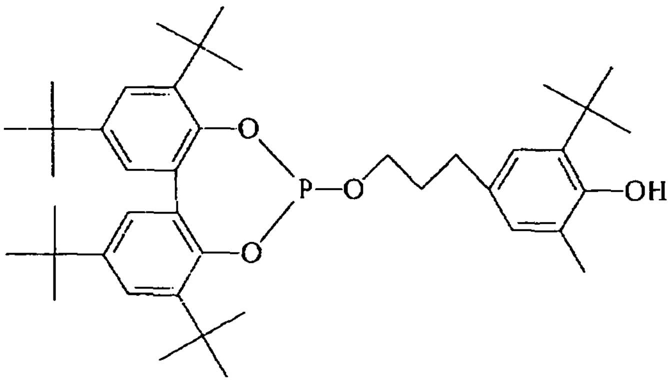

PEP36: Adekastub PEP-36 (trade name), manufactured by Asahi Denka Kogyo Co., Ltd.

[Chemical 11]

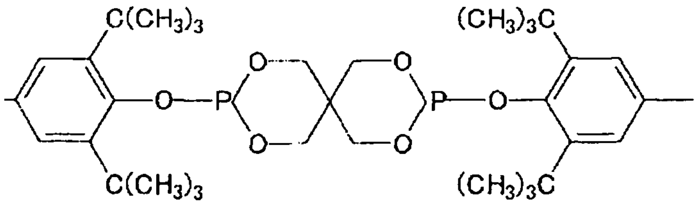

[Table 1]

Table 1

| | Example 1 | Example 2 | Comparative Example 1 Example 1 |
|---|---|---|---|
| $MFR_{2.16}$ (g/10 min) | 0.5 | | |
| $MFR_{21.6}$ (g/10 min) | 45 | | |
| Density ($kg/m^3$) | 960 | | |
| Additives (ppm) | Irg. 168 = 1500<br>Ca-St = 500<br>EA = 1300 | | |
| Phenolic antioxidant (ppm) | Irg. 1076 (500) | Irg. 3114 (1000) | None |
| ESCR of Bottles (h) | >600 | > 600 | 240 |

(continued)

| | Example 1 | Example 2 | Comparative Example 1 Example 1 |
|---|---|---|---|
| ESCR according to Bent Method (h) | > 600 | > 600 | > 600 |

[Table 2]

Table 2

| | Example 3 | Comparative Example 2 |
|---|---|---|
| $MFR_{2.16}$ (g/10 min) | 0.25 | |
| $MFR_{21.6}$ (g/10 min) | 65 | |
| Density ($kg/m^3$) | 960 | |
| Additives (ppm) | Irg. 168= 1500<br>Ca-St = 500<br>EA = 1300 | Irg. 168 = 1500<br>Ca-St = 500<br>EA = 1300 |
| Phenolic antioxidant (ppm) | GP (1000) | None |
| ESCR of Bottles (h) | 200 | 150 |
| ESCR according to Bent Method (h) | 230 | 190 |

[Table 3]

Table 3

| | Example 4 | Comparative Example 3 | Comparative Example 4 |
|---|---|---|---|
| $MFR_{2.16}$ (g/10 min) | 0.36 | | |
| $MFR_{21.6}$ (g/10 min) | 35 | | |
| Density ($kg/m^3$) | 958 | | |
| Additives (ppm) | PEP36 = 500<br>Ca-St = 1500<br>EA = 900 | PEP36 = 500<br>Ca-St = 1500<br>EA = 900 | PEP36 = 500<br>Ca-St = 1500<br>EA = 900 |
| Phenolic antioxidant (ppm) | Irg. 3114 =1000 | BHT (1000) | None |
| ESCR of Bottles (h) | 130 | 90 | 90 |
| ESCR according to Bent Method (h) | 300 | 200 | 200 |

[Example 5]

100 Parts by weight of a commercially available Ziegler-catalyst polyethylene of "Hi-zex 9200B" (trade name, manufactured by Prime Polymer Co., Ltd.) was mixed with 0.05 part by weight of phenolic antioxidant "Irganox 1076"(trade name, manufactured by Ciba Specialty Chemicals Inc.) as an environmental stress cracking resistance improver. The resulting mixture was granulated under the conditions described in Example 1. The physical properties of thus granulated ethylene resin and hollow molded articles obtained from the resin are shown in Table 4. The articles exhibited an excellent ESCR as compared with the case (Comparative Example 5) where the environmental stress cracking resistance improver of the present invention was not used.

[Example 6]

100 Parts by weight of a commercially available Ziegler-catalyst polyethylene of "Hi-zex 9200B" (trade name, manufactured by Prime Polymer Co., Ltd.) was mixed with 0.10 part by weight of phenolic antioxidant "Irganox 3114"(trade name, manufactured by Ciba Specialty Chemicals Inc.) as an environmental stress cracking resistance improver. The resulting mixture was granulated under the conditions described in Example 1. The physical properties of thus granulated

ethylene resin and hollow molded articles obtained from the resin are shown in Table 4. The articles exhibited an excellent ESCR as compared with the case (Comparative Example 5) where the environmental stress cracking resistance improver of the present invention was not used.

[Comparative Example 5]

The physical properties of a resin composed of 100 parts by weight of a commercially available Ziegler-catalyst polyethylene of "Hi-zex 9200B (trade name, manufactured by Prime Polymer Co., Ltd.) and hollow molded articles obtained from the resin are shown in Table 4.

[Table 4]

Table 4

| | Example 5 | Example 6 | Comparative Example 5 |
|---|---|---|---|
| $MFR_{2.16}$ (g/10 min) | 0.01 | | |
| $MFR_{21.6}$ (g/10 min) | 2.4 | | |
| Density (kg/$m^3$) | 956 | | |
| Phenolic antioxidant (ppm) | Irg. 1076 (500) | Irg. 3114 (1000) | None |
| ESCR of Bottles(h) | 100 | 110 | 70 |
| ESCR according to Bent Method (h) | 220 | 250 | 150 |

[Industrial Applicability]

The environmental stress cracking resistance properties of olefin resins such as ethylene polymers can be remarkably improved by the addition of the environmental stress cracking resistance improver of the present invention. The blow molded article, the inflated article, the cast molded article, the extrusion lamination molded article, and the extruded articles such as pipes or profiles according to the invention exhibit excellent environmental stress cracking resistance properties, and they are suitably used in the applications such as fuel tanks, cans for industrial chemicals, bleacher containers, detergent containers, or softener containers.

## Claims

1. An environmental stress cracking resistance improver comprising:

    a compound having in the molecule thereof a structure represented by the following general formula (I) and a molecular weight of from 200 to 2,000;

[Chemical 1]

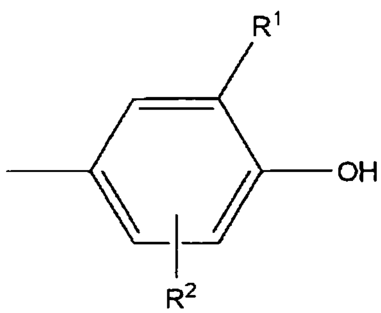

・・・ (I)

in the above general formula (I), $R^1$ and $R^2$ are each a hydrocarbon group having 1 to 6 carbon atoms and may be the same or different from each other.

**2.** The environmental stress cracking resistance improver according to claim 1, wherein
the compound has in the molecule thereof 1 to 4 benzyl groups with a substituted aromatic ring represented by the following general formula (II) and has a molecular weight of from 300 to 2,000;

[Chemical 2]

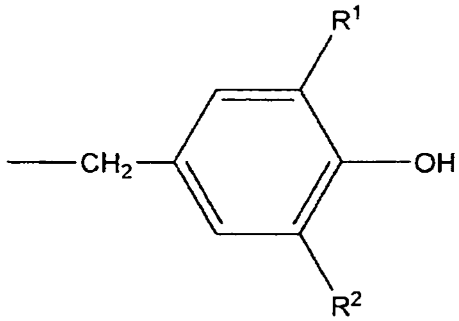

$\cdot\cdot\cdot$ (II)

in the above general formula (II), $R^1$ and $R^2$ are each a hydrocarbon group having 1 to 6 carbon atoms and may be the same or different from each other.

**3.** The environmental stress cracking resistance improver according to claim 2, wherein
$R^1$ and $R^2$ are selected from methyl group and tert-butyl group.

**4.** A method for improving environmental stress cracking resistance properties of an olefin resin comprising:

adding the environmental stress cracking resistance improver according to any of claims 1 to 3 to the resin.

**5.** A resin composition with improved environmental stress cracking resistance properties comprising:

the environmental stress cracking resistance improver according to any of claims 1 to 3, and
an olefin resin.

**6.** The resin composition with improved environmental stress cracking resistance properties according to claim 5, wherein
the resin composition contains the environmental stress cracking resistance improver according to any of claims 1 to 3 in an amount of from 0.005 to 5 parts by weight with respect to 100 parts by weight of the olefin resin.

**7.** The resin composition with improved environmental stress cracking resistance properties according to claim 5 or 6, wherein
the olefin resin is an ethylene resin.

**8.** The resin composition with improved environmental stress cracking resistance properties according to claim 7, wherein
the ethylene resin satisfies the following requirements (1) to (3) simultaneously:

(1) the ethylene resin contains structural units derived from an $\alpha$-olefin having 3 to 10 carbon atoms in an amount of 1.00 mol% or less;
(2) the density of the ethylene resin is in the range of from 945 to 975 $kg/m^3$; and
(3) the MFR of the ethylene resin measured at a temperature of 190°C and under a load of 21.6 kg in accordance with ASTM D1238-89 is in the range of from 1 to 1,000 g/10 min.

**9.** A blow molded article comprising the resin composition with improved environmental stress cracking resistance properties according to any of claims 5 to 8.

**10.** The blow molded article according to claim 9, wherein the blow molded article is a fuel tank, a can for industrial chemicals, or a bottle container.

**INTERNATIONAL SEARCH REPORT**

International application No.
PCT/JP2007/052668

A. CLASSIFICATION OF SUBJECT MATTER
*C08K5/13*(2006.01)i, *C08F10/02*(2006.01)i, *C08F297/08*(2006.01)i, *C08L23/00*(2006.01)i

According to International Patent Classification (IPC) or to both national classification and IPC

B. FIELDS SEARCHED

Minimum documentation searched (classification system followed by classification symbols)
C08K, C08F, C08L

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| X | JP 2005-523842 A (Sorurei Polyorefins Europe Belgium), 11 August, 2005 (11.08.05), Full descriptions | 1-10 |
| X | JP 2005-523968 A (Sorurei Polyorefins Europe Belgium), 11 August, 2005 (11.08.05), Full descriptions | 1-10 |
| X | JP 11-106574 A (Asahi Chemical Industry Co., Ltd.), 20 April, 1999 (20.04.99), Full descriptions (Family: none) | 1-7,9,10 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
07 May, 2007 (07.05.07)

Date of mailing of the international search report
15 May, 2007 (15.05.07)

Name and mailing address of the ISA/
Japanese Patent Office

Facsimile No.

Authorized officer

Telephone No.

Form PCT/ISA/210 (second sheet) (April 2005)

**INTERNATIONAL SEARCH REPORT**

International application No.
PCT/JP2007/052668

C (Continuation). DOCUMENTS CONSIDERED TO BE RELEVANT

| Category* | Citation of document, with indication, where appropriate, of the relevant passages | Relevant to claim No. |
|---|---|---|
| X | JP 7-188477 A (Maruzen Polymer Kabushiki Kaisha), 25 July, 1995 (25.07.95), Full descriptions | 1-7,9,10 |
| X | JP 2001-311484 A (Fujikura Ltd.), 09 November, 2001 (09.11.01), Full descriptions (Family: none) | 1-7,9 |
| A | WO 01/27124 A1 (Mitsui Chemicals, Inc.), 19 April, 2001 (19.04.01), Full descriptions | 4-8 |

Form PCT/ISA/210 (continuation of second sheet) (April 2005)

**INTERNATIONAL SEARCH REPORT**
Information on patent family members

International application No.
PCT/JP2007/052668

| | | | |
|---|---|---|---|
| JP 2005-523842 A | 2005.08.11 | EP 1359191 A1 | 2003.11.05 |
| | | WO 2003/093362 A1 | 2003.11.13 |
| | | EP 1499673 A1 | 2005.01.26 |
| | | US 2005/170112 A1 | 2005.08.04 |
| JP 2005-523968 A | 2005.08.11 | EP 1357152 A1 | 2003.10.29 |
| | | WO 2003/091329 A1 | 2003.11.06 |
| | | EP 1499674 A1 | 2005.01.26 |
| | | BR 200309571 A | 2005.02.09 |
| | | CN 1649953 A | 2005.08.03 |
| | | US 2006/054513 A1 | 2006.03.16 |
| JP 7-188477 A | 1995.07.25 | JP 3330708 B2 | 2002.09.30 |
| WO 01/27124 A1 | 2004.04.19 | EP 1138687 A1 | 2001.10.04 |
| | | KR 2001086089 A | 2001.09.07 |
| | | CN 1327448 A | 2001.12.19 |
| | | US 6939928 B1 | 2005.09.06 |
| | | US 2005/0228155 A1 | 2005.10.13 |

Form PCT/ISA/210 (patent family annex) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H093266 B
- JP H09176400 B
- WO 0127124 A
- JP H0278687 B
- JP H01501950 B
- JP H01502036 B
- JP H03179005 B
- JP H03179006 B
- JP H03207703 B
- JP H03207704 B
- US 5321106 A